# FASCICULE DE BREVET EUROPEEN

(11) **EP 4 182 641 B1**
(45) Date de publication et mention de la délivrance du brevet: **28.02.2024**
(21) Numéro de dépôt: 21740573.7
(22) Date de dépôt: 13.07.2021
(51) Int. Cl.: G01F 1/10, G01F 5/00, G01F 15/075, G01K 11/3206, G01L 11/02

(54) **SYSTÈME À ROTOR DE MESURE DU DÉBIT D'UN FLUIDE COMPORTANT DU LIQUIDE, ET ÉQUIPEMENT ASSOCIÉ**
SYSTEM MIT EINEM ROTOR ZUR MESSUNG DER DURCHFLUSSRATE EINER FLÜSSIGKEIT MIT FLÜSSIGKEIT UND ZUGEHÖRIGE AUSRÜSTUNG
SYSTEM HAVING A ROTOR FOR MEASURING THE FLOW RATE OF A FLUID COMPRISING LIQUID, AND ASSOCIATED EQUIPMENT

(30) Priorité: 17.07.2020 FR 2007554
(43) Date de publication de la demande: 24.05.2023
(73) Titulaire: Commissariat à l'Energie Atomique et aux Energies Alternatives, 75015 Paris (FR)
(72) Inventeur: LATIL, Philippe, 84120 Pertuis (FR)
(74) Mandataire: Hautier IP
(86) Numéro de dépôt international: PCT/EP2021/069505
(87) Numéro de publication internationale: WO 2022/013241

(56) Documents cités:
- EP-A2- 0 769 681
- WO-A1-86/00403
- FR-A1- 2 222 638
- GB-A- 752 822
- GB-A- 2 083 210
- JP-A- S57 168 114
- JP-A- 2001 194 378
- US-A- 3 217 539
- US-A- 3 788 285
- US-A- 4 851 666
- US-A1- 2019 376 821

## Description

### DOMAINE TECHNIQUE

La présente invention concerne le domaine des systèmes de mesure du débit d'un fluide comportant du liquide. Elle trouve pour application particulièrement avantageuse la mesure optique du débit d'un fluide liquide ou comportant du liquide pour des applications en chimie, pharmacie, agro-alimentaire, pétrochimie, ou dans le bâtiment.

### ETAT DE LA TECHNIQUE

De nombreuses applications demandent une mesure précise et fiable du débit d'un fluide. Une mesure du débit d'un fluide peut par exemple être nécessaire au bon fonctionnement d'un procédé, ou pour des contrôles de sécurité. On peut notamment citer les domaines de la chimie, de la pharmacie, de l'agro-alimentaire, de la pétrochimie, ou encore du bâtiment.

Il existe plusieurs systèmes de mesure du débit, aussi appelés débitmètres, pour mesurer le débit d'un fluide. Certains débitmètres déterminent le débit du fluide à partir de sa pression, ou d'une variation de sa pression. Les débitmètres déprimogènes sont par exemple configurés pour limiter l'écoulement du fluide dans une conduite et ainsi créer une chute de pression, par exemple par effet Venturi. Ces débitmètres entraînent toutefois des pertes de charge et perturbent l'écoulement du fluide. On peut en outre citer les tubes de Pitot, dont la précision est limitée si la vitesse d'écoulement du fluide est faible. Plus généralement, les débitmètres basés sur la pression présentent l'inconvénient d'être sensibles à des variations incontrôlées de la pression du fluide. De telles variations peuvent par exemple avoir lieu dans un fluide diphasique entre une phase gazeuse et une phase vapeur. La précision de leur mesure est donc limitée.

D'autres débitmètres utilisent des effets magnétiques pour déterminer le débit du fluide. On peut citer par exemple les débitmètres à effet Hall ou les débitmètres à rotor couplé avec une détection électromagnétique. Ces débitmètres sont toutefois sensibles à l'environnement électromagnétique de proximité, ce qui limite la précision de leur mesure. En outre, une détection basée sur un effet magnétique impose des contraintes sur les matériaux constitutifs du débitmètre et sur la nature du fluide.

Il existe des débitmètres basés sur une mesure optique. Il est notamment connu du document JPH1164113 A, un système comprenant un rotor et un dispositif de mesure optique de la vitesse de rotation du rotor. Pour cela, le dispositif de mesure est configuré pour appliquer un rayonnement lumineux sur les pales du rotor, selon une direction parallèle à l'axe de rotation du rotor. Il s'avère en pratique que ce type de débitmètre ne procure pas une précision satisfaisante.

US 4851666 A JPS57168114A, GB2083210 A et US3217539 divulguent un système pour mesurer la vitesse d'un fluide comprenant une turbine entrainée en rotation par le fluide autour d'un axe parallèle à la direction d'écoulement du fluide.

FR2222638 A1 décrit un débitmètre comprenant un rotor à aubes monté horizontalement dans un carter 1 du débitmètre.

La précision de mesure que procurent ces débitmètres reste améliorable.

Il existe un besoin pour améliorer la précision des débitmètres décrits dans les solutions de l'état de la technique. Un autre besoin consiste à proposer un débitmètre présentant une précision satisfaisante dans un environnement à conditions sévères, par exemple en termes de pression, de température, de nature d'un fluide.

Pour cela, un objet de la présente invention est donc un système de mesure de débit d'un fluide comportant du liquide amélioré par rapport aux solutions existantes.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un mode de réalisation on prévoit un système de mesure du débit d'un fluide comportant du liquide comprenant :
- un corps comprenant au moins une entrée, au moins une sortie et au moins un passage pour l'écoulement du fluide depuis l'entrée jusqu'à la sortie,
- au moins un rotor disposé à l'intérieur du passage et configuré pour être
   entraîné, par l'écoulement du fluide, en rotation autour d'un axe sensiblement parallèle à une direction principale selon laquelle le fluide est destiné à s'écouler dans le passage, le rotor comprenant une pluralité de pales,
- un dispositif de mesure d'une vitesse de rotation du rotor, le dispositif de mesure comprenant :
   - un module d'émission d'un rayonnement lumineux incident,
   - un module optique configuré pour :
      ∘ transmettre le rayonnement lumineux incident depuis le module d'émission sur des pales du rotor, et
      ∘ recevoir un rayonnement lumineux réfléchi, le rayonnement lumineux réfléchi étant issu de la réflexion, sur les pales du rotor, du rayonnement lumineux incident,
   - un module de conversion configuré pour :
      ∘ déterminer la vitesse de rotation du rotor en fonction du rayonnement réfléchi et
      ∘ déterminer le débit du fluide en fonction de la vitesse de rotation du rotor, et dans lequel le module optique est configuré de sorte que le rayonnement lumineux incident est incident sur les pales du rotor selon une direction sensiblement perpendiculaire à l'axe de rotation du rotor, et en ce que le dispositif de mesure comprend en outre un module de raccordement du module optique au corps, le module de raccordement étant configuré pour établir une jonction étanche au fluide entre le module optique et le passage, et caractérisé en ce que au moins une pale du rotor présente un coefficient de réflexion du rayonnement lumineux différent du coefficient de réflexion du rayonnement lumineux d'au moins une autre pale.

Le rayonnement incident est ainsi appliqué de manière radiale sur le rotor, par le module optique. Dans la direction d'écoulement du fluide, l'encombrement du module optique est donc réduit par rapport aux solutions existantes. Lorsque le fluide s'écoule dans le système au niveau du rotor, des turbulences des lignes de courant sont induites. Le module optique n'étant pas disposé dans la direction d'écoulement du fluide mais perpendiculairement à celle-ci, l'impact de ces turbulences sur le module optique sont minimisées. La précision de la mesure du débit est donc augmentée par rapport aux solutions existantes.

En outre, le module optique n'étant pas disposé le long de l'écoulement du fluide, cet écoulement n'est pas perturbé par la mesure du débit. Notamment, cette disposition minimise des pertes de charges dans l'écoulement du fluide. L'impact de la mesure sur l'écoulement du fluide est ainsi minimisé, par rapport aux solutions existantes. Le système de mesure permet donc une mesure précise et fiable du débit du fluide.

En outre, il s'avère que le système de mesure du débit proposé permet une mesure précise et fiable pour des fluides inhomogènes, typiquement des fluides diphasiques (fluides comportant du liquide et du gaz ou du liquide et des éléments solides) ou des fluides triphasiques (fluides comportant du liquide, du gaz et des éléments solides). Les domaines d'application de cette invention sont donc particulièrement nombreux et variés.

Une autre solution aurait pu consister à prévoir d'appliquer le rayonnement lumineux incident de manière radiale sur une pièce dédiée, portant des marques permettant cette lecture. Par rapport à cette solution, le système proposé par la présente invention :
- réduit la perturbation de l'écoulement en minimisant l'encombrement du système dans la direction d'écoulement du fluide,
- présente une mesure plus précise et fiable du débit,
- présente un nombre de pièces réduit. Le système est donc rendu plus simple et plus fiable.

En outre, les matériaux des pales du rotor présentant des coefficients de réflexion différents, le rayon lumineux présente une réflexion plus ou moins importante en fonction du matériau constitutif des pales. Le rayonnement lumineux réfléchi est donc modulé en fonction des pales sur lesquelles il se réfléchit, ce qui facilite et fiabilise la détermination du nombre de tour/unité de temps du rotor. La précision de la mesure du débit peut donc ainsi être encore améliorée. Cette solution se démarque clairement des solutions mettant en oeuvre des surfaces de réflexion sur chaque pale d'un rotor.

Selon un exemple, l'ensemble de l'au moins une pale est faite d'un matériau distinct d'un matériau constitutif de l'ensemble de l'au moins une autre pale, qui présente un coefficient de réflexion du rayonnement lumineux différent, par exemple inférieur, au matériau constitutif de l'au moins une autre pale. Selon un exemple alternatif, au moins une pale est revêtue d'un revêtement différent d'un revêtement et/ou d'un matériau de l'au moins une autre pale, de façon à présenter un coefficient de réflexion du rayonnement lumineux différent, par exemple inférieur au matériau constitutif de l'au moins une autre pale.

Le dispositif de mesure comprend un module de raccordement du module optique au corps, le module de raccordement étant configuré pour établir une jonction étanche au fluide entre le module optique et le passage. Ainsi le module optique n'est pas en contact direct du fluide dont on cherche à mesurer l'écoulement. Le système offre donc une précision satisfaisante dans un environnement à conditions sévères, par exemple en termes de pression, de température, de nature d'un fluide, et/ou de rayonnement irradiant.

Avantageusement, le module de raccordement est configuré pour établir une jonction étanche et transparente aux rayonnements lumineux incident et réfléchi.

Un deuxième aspect concerne un équipement comprenant une enceinte configurée pour contenir un fluide comportant du liquide en écoulement, et un système de mesure du débit du fluide comportant du liquide selon le premier aspect. L'enceinte est délimitée par une paroi distincte du corps du système de mesure.

Selon un exemple, l'enceinte est configurée pour contenir un fluide comportant du liquide à une pression inférieure à 200 bar et/ou à une température inférieure à 350 °C et/ou s'écoulant à un débit compris entre 1 et 1000 m³/h, de préférence entre 1 et 10 m³/h.

Selon un exemple, l'enceinte est configurée pour contenir un fluide comportant du liquide à une pression inférieure à 10 bar et/ou à une température inférieure à 120 °C et/ou s'écoulant à un débit compris entre 1 et 1000 m³/h, de préférence entre 1 et 10 m³/h.

Il est en outre décrit un procédé de mesure, ne faisant pas partie de l'invention telle que revendiquée, d'un débit d'un fluide en écoulement par le système de mesure selon le premier aspect et/ou en écoulement dans l'équipement selon le deuxième aspect, comprenant :
- une émission d'un rayonnement lumineux incident par le module d'émission, puis
- une transmission, par le module optique, du rayonnement lumineux incident depuis le module d'émission sur des pales du rotor, de sorte que le rayonnement lumineux incident est incident sur les pales du rotor selon une direction sensiblement perpendiculaire à l'axe de rotation du rotor, puis
- une réflexion du rayonnement lumineux incident sur les pales du rotor, puis
- une réception, par le module optique, du rayonnement réfléchi, puis
- une conversion, par le module de conversion, du rayonnement réfléchi de façon à déterminer la vitesse de rotation du rotor, puis à déterminer le débit du fluide en fonction de la vitesse de rotation du rotor.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente une vue d'ensemble schématique de l'équipement selon un exemple de réalisation de l'invention.
La figure 2 représente un schéma fonctionnel du système de mesure selon un exemple de réalisation de l'invention.
Les figures 3A et 3B illustrent de manière simplifiée les étapes d'un procédé de mesure du débit d'un fluide, ne faisant pas partie de l'invention telle que revendiquée.
La figure 4 représente une vue en coupe longitudinale du module actionneur du système de mesure illustré en figure 1.
La figure 5 représente une vue en coupe transversale du module actionneur du système de mesure illustré en figure 4.
La figure 6 représente le principe de fonctionnement d'une fibre optique comprenant un réseau de Bragg.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles du système de mesure qui peuvent éventuellement être utilisées en association ou alternativement :
- selon un exemple, le rotor comprend une unique pale présentant un coefficient de réflexion du rayonnement lumineux inférieur à au moins une autre pale,
- selon un exemple, le rotor comprend une unique pale présentant un coefficient de réflexion du rayonnement lumineux supérieur à au moins une autre pale.
- le module optique comprend une portion de transmission du rayonnement lumineux incident disposée, selon la direction sensiblement perpendiculaire à l'axe de rotation du rotor, à une distance inférieure à 1 cm, voire à 5 mm, voire à 2 mm, du diamètre externe du rotor. Le module optique permet ainsi une mesure au plus près des pales du rotor. La précision de la mesure du débit est donc maintenue pour un fluide inhomogène ou un fluide opaque,
- le module optique est configuré pour être séparé du rotor au moins par le fluide. Selon un exemple, la portion de transmission du rayonnement lumineux incident est disposée, selon la direction sensiblement perpendiculaire à l'axe de rotation du rotor, à une distance non nulle du diamètre externe du rotor.
- le module optique comprend une fibre optique. Selon un exemple, la fibre optique présente, entre la portion de transmission et au moins un parmi le module d'émission et le module de réception, une longueur adaptable en fonction de l'application visée, par exemple supérieure à 0,5 m, voire 1 m,
- le module optique comprend une fibre optique à détection de proximité,
- le fluide est un liquide. Alternativement, il s'agit d'un fluide comportant du liquide et au moins l'un parmi des éléments gazeux ou solides. Il peut ainsi s'agir d'un mélange liquide et solide ou liquide et gaz ou encore liquide et solide et gaz.
- selon un exemple le fluide est essentiellement liquide. Dans le dispositif de mesure, le liquide occupe au moins 70% et de préférence au moins 80% du volume du fluide,
- de préférence, le corps s'étend, entre son entrée et sa sortie, principalement selon une direction parallèle, de préférence identique, à l'axe de rotation du rotor,
- le module optique est configuré pour transmettre le rayonnement lumineux réfléchi au module de conversion, par exemple par le biais d'un module de réception,
- le corps présente une paroi externe configurée pour être au contact du fluide en écoulement. Le corps peut être disposé à l'intérieur d'une enceinte contenant le fluide en écoulement,
- seulement une fraction du fluide peut s'écouler dans le passage du corps. La perte de charge pouvant être générée par le système est ainsi réduite,
- le rotor comprend au moins quatre pales, au moins deux pales étant en matière plastique et au moins deux pales étant en métal, de préférence lesdites au moins deux pales en métal sont en acier inoxydable,
- chaque pale est uniquement faite d'un matériau. Ainsi la fabrication du rotor et donc du système est simplifiée. La différence de réflexion entre les pales se produit sur toute la surface des pales sur laquelle le rayonnement est réfléchi, améliorant encore la précision de la mesure du débit,
- les pales du rotor présentent alternativement des coefficients de réflexion distincts. La modulation du rayonnement lumineux réfléchi se produit ainsi en fonction des pales successives sur lesquelles le rayonnement lumineux se réfléchit,
- le module d'émission comprend une source laser. Selon cet exemple, le module de conversion peut comprendre un interféromètre laser,
- le module optique comprend une fibre optique comprenant un réseau de Bragg. Ainsi, le dispositif de mesure permet non seulement une mesure du débit du fluide, mais en outre une mesure d'au moins l'une parmi sa température et sa pression,
- le module d'émission est configuré pour émettre un rayonnement lumineux incident présentant une longueur d'onde comprise entre 600 et 2000 nm,
- le système comprend :
   - au moins un capteur de pression configuré pour mesurer un paramètre relatif à une pression du fluide s'écoulant dans le corps. Ce paramètre est par exemple la pression du fluide, et/ou
   - au moins un capteur de température, configuré pour mesurer un paramètre relatif à une température du fluide s'écoulant dans le corps. Ce paramètre est par exemple la température du fluide.

Cela permet de collecter plus de données sur le fluide tout en conservant un encombrement limité et en simplifiant la pose et la maintenance des systèmes de mesure.

Notons que le procédé de mesure peut présenter toute étape résultant de la mise en oeuvre d'une caractéristique du système de mesure.

Dans la présente demande de brevet, lorsque l'on indique que deux pièces sont distinctes, cela signifie que ces pièces sont séparées. Elles peuvent être:
- positionnées à distances l'une de l'autre, et/ou
- mobiles l'une par rapport à l'autre et/ou
- solidaires l'une de l'autre en étant fixées par des éléments rapportés, cette fixation étant démontable ou non.

Une pièce unitaire monobloc ne peut donc pas être constituée de deux pièces distinctes.

Dans la description détaillée qui suit, il pourra être fait usage de termes tels que « longitudinal », « transversal », « supérieur », « inférieur », « haut », « bas », « avant », « arrière », « intérieur », « extérieur ». Ces termes doivent être interprétés de façon relative en relation avec la position normale de l'équipement et/ou du système de mesure. Par exemple, la direction « longitudinale » correspond à la direction d'extension principale du module actionneur du système de mesure.

On utilisera également un repère dont la direction longitudinale ou avant/arrière correspond à l'axe x, la direction transversale ou droite/gauche correspond à l'axe y et la direction bas/haut correspond à l'axe z.

« Interne » désigne les éléments ou les faces tournées vers l'intérieur de l'équipement et/ou du système de mesure, et « externe » désigne les éléments ou les faces tournées vers l'extérieur de l'équipement et/ou du système de mesure.

On entend par un paramètre « sensiblement égal/supérieur/inférieur à » une valeur donnée, que ce paramètre est égal/supérieur/inférieur à la valeur donnée, à plus ou moins 10 % près, voire à plus ou moins 5 % près, de cette valeur.

Dans la présente demande de brevet, on considère que le fluide est liquide lorsque le fluide est au moins en partie, voire totalement, à l'état liquide. On n'exclut donc pas que le fluide soit en partie à l'état gazeux, ni que le fluide comprenne une fraction solide.

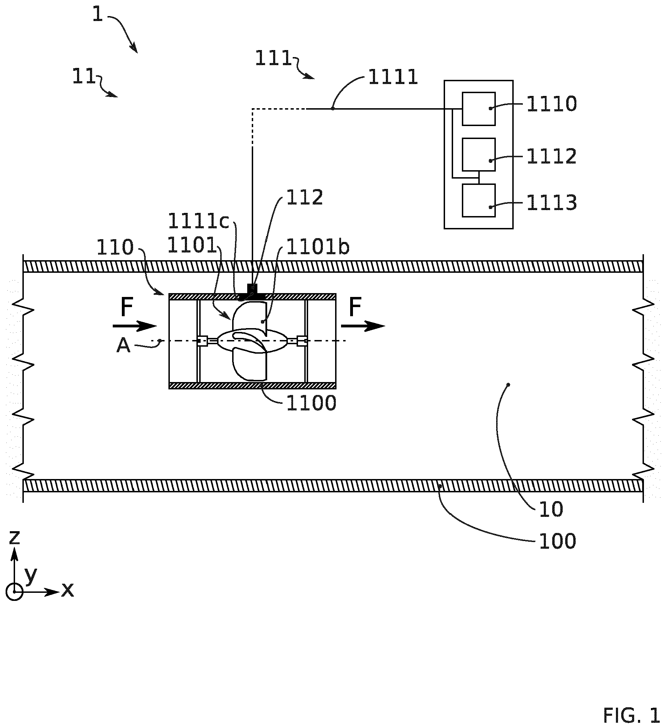

L'équipement 1 est maintenant détaillé en référence à la figure 1. L'équipement comprend une enceinte 10. L'enceinte 10 est configurée pour contenir un fluide comportant du liquide en écoulement. L'enceinte 10 est au moins en partie, voire totalement, délimitée une paroi 100. L'enceinte est par exemple une cuve ou un conduit.

Le fluide en écoulement peut former un environnement à conditions sévères, par exemple en termes de pression, de température, de nature du fluide. Selon un exemple, le fluide peut en outre être corrosif. Selon un exemple, le fluide est soumis à des conditions de pression et de températures de sorte que le fluide est au moins partiellement, voire totalement, à l'état liquide. L'équipement 1 et notamment l'enceinte 10 peuvent être configurés pour contenir un fluide sous pression et/ou à haute température. L'équipement 1 peut être configuré de sorte que le fluide est à une température sensiblement comprise entre la température de fusion du fluide, dans les conditions de pression de l'enceinte 10, et 350 °C, voire entre la température de fusion du fluide, dans les conditions de pression de l'enceinte 10, et 120 °C. L'équipement 1 peut être configuré de sorte que le fluide soit à une pression suffisante pour maintenir le fluide au moins en partie liquide. La pression du fluide peut en outre être sensiblement inférieure à 200 bar, voire inférieure à 155 bar. Selon un exemple, la pression du fluide peut en outre être sensiblement inférieure à 10 bar. L'équipement 1 peut être configuré de sorte que le fluide s'écoule à un débit compris entre 1 et 1000 m³/h, de préférence entre 0,1 et 5 m³/h.

Par exemple, l'enceinte 10 de l'équipement 1 est un canal pour des applications de pétrochimie tel qu'un canal de circulation de fluides pétrochimiques. Selon un autre exemple, l'enceinte 10 est un conduit dans le lequel circule un solvant, un réactif, ou un produit dans un équipement 1 de chimie, de pharmacie, ou d'agro-alimentaire. Selon un exemple, l'enceinte 10 est un conduit d'un bâtiment, tel qu'un conduit d'approvisionnement en eau ou un conduit d'évacuation d'effluent.

L'équipement comprend en outre un système 11 configuré pour mesurer au moins le débit du fluide en écoulement. Pour cela, et comme illustré dans le schéma fonctionnel 2, le système 11 comprend un module actionneur 110, configuré pour être entrainé par l'écoulement du fluide, représenté par les flèches F dans la figure 1. Le module actionneur 110 comprend un corps 1100 dans lequel le fluide s'écoule, par exemple selon la direction longitudinale x. Le module actionneur 110 comprend en outre au moins un rotor 1101 disposé à l'intérieur du corps 1100. Le rotor 1101 est configuré pour être entrainé en rotation autour de l'axe A. L'axe de rotation A est sensiblement parallèle à la direction d'écoulement x dans le corps 1100.

Le système 11 comprend en outre un dispositif de mesure 111 de la vitesse de rotation du rotor 1101. Le dispositif de mesure 111 est configuré pour déterminer optiquement la vitesse de rotation du rotor 1101. Pour cela, et comme illustré dans le schéma fonctionnel 2, le dispositif de mesure 111 peut comprendre un module d'émission 1110 d'un rayonnement lumineux, un module optique 1111, un module de réception 1112 du rayonnement lumineux et un module de conversion 1113.

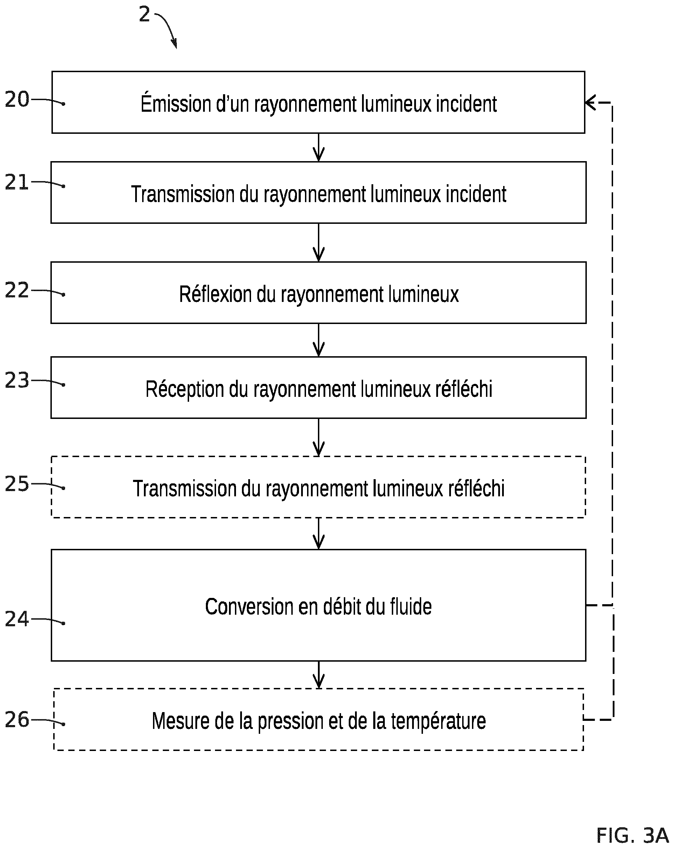

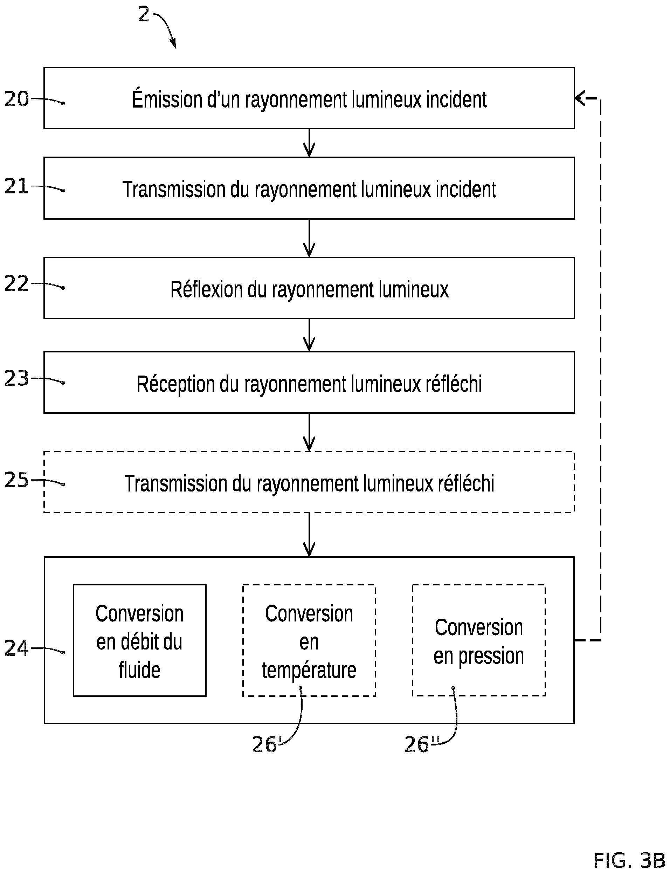

La cinématique de fonctionnement du système 11 et le procédé 2 de mesure du débit du fluide sont maintenant décrits relativement aux figures 1, 3A et 3B. Dans les figures 3A et 3B, des étapes optionnelles sont indiquées en pointillées, et sont décrites ultérieurement. Le module d'émission 1110 émet 20 un rayonnement lumineux dit incident. Le module optique 1111 est configuré pour transmettre 21 le rayonnement lumineux incident depuis le module d'émission 1110 jusqu'au module actionneur 110, et plus particulièrement jusqu'au rotor 1101 entrainé en rotation par le fluide.

Au niveau du rotor 1101, le rayonnement lumineux incident se réfléchit 22 sur les pales 1101b du rotor 1101. Le module optique 1111 est configuré pour recevoir le rayonnement lumineux réfléchi. Le module optique 1111 peut ensuite transmettre 25 le rayonnement lumineux réfléchi au module de conversion 1113. Cette transmission 25 peut être effectuée par le biais du module de réception 1112, configuré pour transformer le rayonnement lumineux réfléchi en un signal physique correspondant, par exemple un signal électrique. Le module de conversion 1113 peut comprendre le module de réception 1112.

Le rayonnement lumineux réfléchi est modulé en fonction de la rotation des pales 1101b autour de l'axe A. Par exemple, l'intensité du rayonnement lumineux réfléchi est modulée par la rotation des pales 1101b. Le module de conversion 1113 est configuré pour convertir le rayonnement réfléchi, ou le signal physique correspondant, en nombre de rotations du rotor 1101 par unité de temps, ce qui correspond à la vitesse de rotation du rotor 1101. En fonction de la vitesse de rotation du rotor 1101, le module de conversion 1113 est configuré pour déterminer le débit du fluide. Le module de conversion 1113 permet ainsi de convertir 24 le rayonnement réfléchi en débit de fluide.

Le module optique 1111 est configuré de sorte que le rayonnement lumineux incident est incident sur les pales 1101b du rotor 1101 selon une direction z sensiblement perpendiculaire à l'axe A de rotation du rotor 1101. Le module optique 1111 peut comprendre une portion de transmission 1111c du rayonnement lumineux incident, configurée pour transmettre le rayonnement lumineux incident du module optique 1111 au module actionneur 110.

La portion de transmission 1111c peut permettre le passage du rayonnement incident et du rayonnement réfléchie au module optique 1111. La portion de transmission 1111c peut s'étendre selon la direction z sensiblement perpendiculaire à l'axe A de rotation du rotor 1101. L'encombrement du module optique 1111 est minimisé dans la direction x. Ainsi, les pertes de charge dans l'écoulement du fluide sont minimisées. Le système de mesure permet donc une mesure précise et fiable du débit du fluide, et notamment une précision inférieure à 1 % de la valeur à mesurer.

La disposition relative des différents modules du système 11 est maintenant décrite. Le corps 1100 du module actionneur 110 peut être disposé dans la continuité, voire faire partie intégrante, de la paroi 100 de l'enceinte 10. Pour cela, chaque extrémité du corps 1100 peut comprendre une portion de connexion à la paroi 100 de l'enceinte 10, configurée pour canaliser le fluide depuis l'enceinte 10 jusque dans le passage défini par le corps 1100, et/ou former une jonction fluidiquement étanche entre les paroi 100 de l'enceinte 10 et le passage défini par le corps 1100.

De préférence, le corps 1100 est distinct de la paroi 100 de l'enceinte 10. Le corps 1100 peut présenter une paroi externe 1100d configurée pour être au contact du fluide en écoulement. Ainsi, le module actionneur 110 et donc le corps 1100 ainsi que le rotor 1101 sont plongés, de préférence entièrement immergés, à l'intérieur du fluide contenu dans l'enceinte 10. Comme illustré en figure 1, le module actionneur 110 peut être disposé à l'intérieur de l'enceinte 10 contenant le fluide en écoulement. Le système est donc adapté pour mesurer le débit d'un fluide dans un équipement 1 existant. Selon un exemple, le corps 1100 défini un volume inférieur à 1/3, voire 1/5, voire 1/10 d'un volume délimité par la paroi interne de l'enceinte, sur une longueur égale à celle du corps 1100 selon la direction x. Lorsque le corps 1100 est distinct de la paroi 100 de l'enceinte 10, les extrémités du corps 1100 peuvent être exempt de portions de connexion à la paroi 100 de l'enceinte 10, ces portions de connexion étant configurées pour canaliser le fluide depuis l'enceinte 10 jusque dans le passage défini par le corps 1100, et/ou former une jonction fluidiquement étanche entre les paroi 100 de l'enceinte 10 et le passage défini par le corps 1100.

Selon un exemple, le module actionneur 110 est monté de façon amovible manuellement ou par l'intermédiaire d'outils sur l'enceinte 10. Le module actionneur 110 peut être monté sur une paroi 100 de l'enceinte 10, ou sur toute pièce de l'équipement 1 disposée dans l'enceinte 10. Ainsi, le module actionneur 110 peut être introduit et retiré au besoin de l'enceinte 10. Une fois le module 110 est retiré, par exemple pour des maintenances, l'enceinte 10 peut conserver son intégrité. Seulement une fraction du fluide peut en outre s'écouler dans le corps 1100. La perte de charge pouvant être générée par le système 11 est ainsi encore réduite. L'impact de la mesure sur l'écoulement du fluide est encore minimisé.

Selon un exemple, le module optique 1111 comprend un guide d'onde, et plus particulièrement une fibre optique 1111a. Comme illustré en figure 1, la fibre optique 1111a peut s'étendre entre la portion de transmission 1111c et le module d'émission 1110. La fibre optique 1111a peut s'étendre entre la portion de transmission 1111c et au moins l'un parmi le module de réception 1112 et le module de conversion 1113. La fibre optique 1111a permet de déporter le module d'émission 1110 et le module de conversion 1113 du rotor 1101 sur lequel la mesure est effectuée. Le système 11 est donc adapté à la mesure du débit d'un fluide dans un environnement présentant une géométrie contrainte. Le système 11 est en outre adapté à la mesure du débit d'un fluide dans un environnement à conditions sévères, en évitant un éventuel endommagement du module d'émission 1110, du module de réception 1112 et du module de conversion 1113. La portion de transmission 1111c est de préférence disposée à l'extrémité distale de la fibre optique 1111a. La fibre optique1111a peut présenter une longueur adaptable en fonction de l'application visée entre la portion de transmission et : le module d'émission 1110, et/ou le module de réception 1112, et/ou le module de conversion 1113, par exemple supérieure à 0,5 m, voire 1 m.

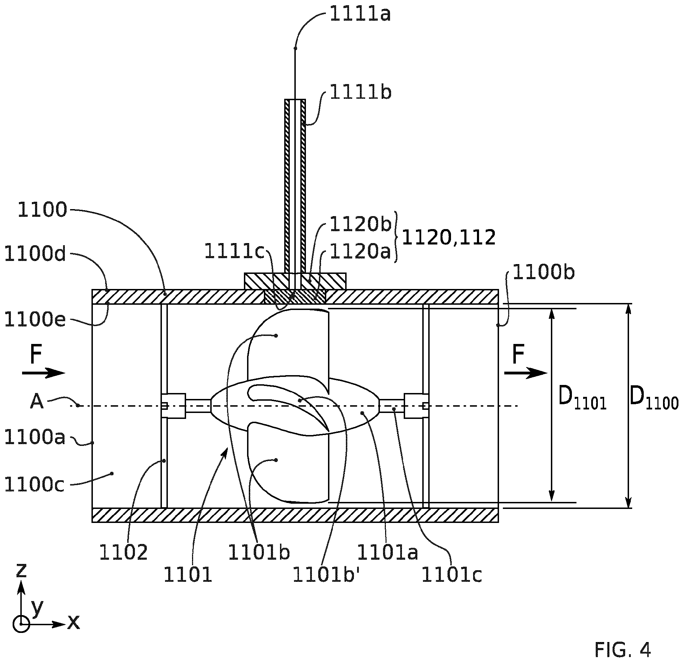

Comme illustré en figure 4, la fibre optique 1111a peut être disposée à l'intérieur d'une gaine 1111b, également désignée câble creux, reliant le module actionneur 110 au module d'émission 1110 et/ou au module de réception 1112 et/ou au module de conversion 1113, voire à un ensemble formé par ces trois modules. De préférence, la gaine 1111b est configurée pour éviter un pliage local de la fibre optique 1111a. Comme illustré en figure 1, lorsque le module actionneur 110 est disposé à l'intérieur de l'enceinte 10, la gaine 1111b peut être disposée perpendiculairement à la direction d'écoulement du fluide, entre la paroi 100 de l'enceinte et le module actionneur 110. La gaine 1111b peut être choisie pour être peu déformable dans le fluide en écoulement, notamment selon la température et la pression du fluide. De préférence, la gaine 1111b est étanche au fluide. Par exemple, la gaine 1111b comprend au moins une couche métallique ou est faite en métal, de préférence en acier inoxydable.

Le dispositif de mesure 111 comprend un module de raccordement 112 configuré pour assurer une jonction 1120 étanche entre le fluide et le module optique 1111. La jonction 1120 étanche permet d'éviter que le fluide pénètre dans le module optique 1111. Comme illustré en figure 4, la jonction étanche 1120 peut comprendre une première partie 1120a, disposée entre le module optique 1111 et le fluide s'écoulant dans le corps 1100 du module actionneur 110. Cette première partie 1120a peut notamment être disposée entre la portion de transmission 1111c du module optique 1111 et le rotor 1101, sur le trajet optique du rayonnement lumineux. Cette première partie 1120a est donc transparente au rayonnement lumineux utilisé. Le matériau de la première partie 1120a peut varier en fonction de la température du fluide. Par exemple, pour une température du fluide caloporteur sensiblement inférieure à 100 °C, la première partie 1120a de la jonction étanche 1120 peut être à base ou faite de verre. Selon un autre exemple, pour une température du fluide caloporteur sensiblement comprise entre 100 °C et 500°C, la première partie 1120a de la jonction étanche 1120 peut être à base ou faite de saphir. L'épaisseur de la première partie 1120a peut être adaptée en fonction de la différence de pression entre le fluide s'écoulant à l'intérieur du corps 1100 et le module optique 1111. La première partie 1120a de la jonction étanche 1120 peut plus particulièrement être configurée pour s'adapter à une pression du fluide jusqu'à sensiblement 600 bar. La jonction étanche 1120 peut comprendre une deuxième partie 1120b. Cette deuxième partie 1120 peut être disposée entre le corps 1100 et la gaine 1111b de sorte que le fluide circulant à l'extérieur du corps 1100 ne pénètre pas dans le module optique 111. Par exemple, cette deuxième partie est en acier inoxydable.

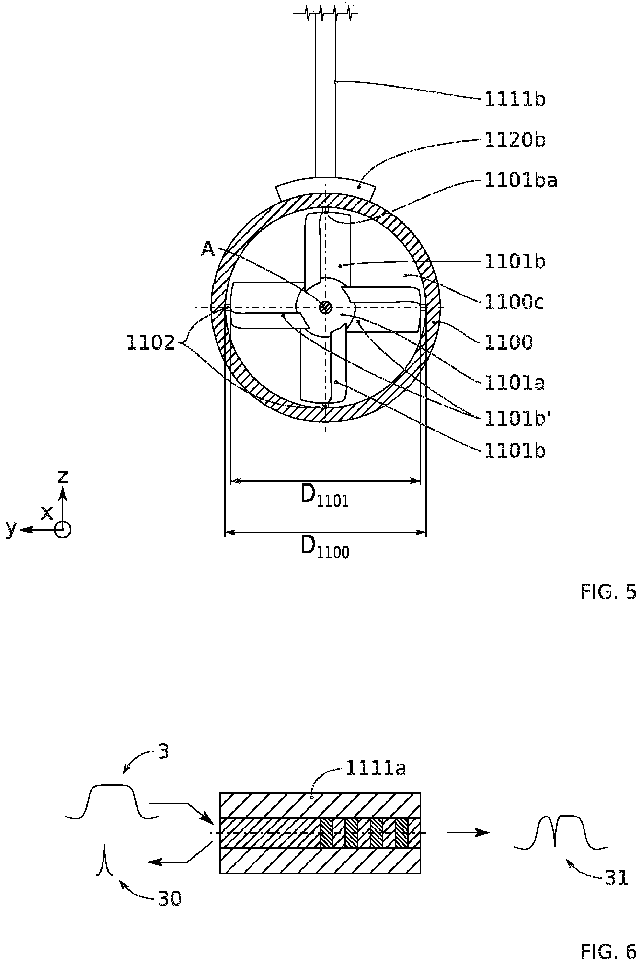

Le module actionneur 110 et sa coopération avec le module optique 1111 sont maintenant décrits plus en détail en référence aux figures 4 et 5. Le corps 1100 présente au moins une entrée 1100a et au moins une sortie 1100b. Il présente en outre au moins un passage 1100c pour l'écoulement du fluide depuis l'entrée 1100a jusqu'à la sortie 1100b. Le corps 1100 peut être disposé de sorte que le passage 1100c soit sensiblement parallèle à la direction d'écoulement x du fluide dans l'enceinte 10, afin que la mesure du débit soit la plus fiable possible.

Le corps 1100 présente en outre une ouverture de passage du module optique 1111. La portion de transmission 1111c du module optique 1111, et/ou la première partie 1120a de la jonction étanche 1120, peuvent être disposées dans cette ouverture de façon à affleurer la face interne 1100e du corps 1100. Ainsi, le module optique 1111 est disposé au plus proche du rotor 1101 sans pénétrer dans le passage 1100c du fluide. Un éventuel décalage ou une éventuelle déformation de la portion de transmission 1111c par rapport au rotor 1101 est évité. Le trajet optique du rayonnement lumineux n'est ainsi pas impacté par l'écoulement du fluide. En outre, le diamètre hydraulique interne du corps 1100 n'est ainsi pas modifié. Le profil de l'écoulement dans le corps 1100 n'est pas perturbé par le module optique 1111.

Le module actionneur 110 comprend au moins un rotor 1101, et de préférence un unique rotor 1101, de préférence monobloc. Ainsi, l'encombrement du rotor 1101 dans la direction x d'écoulement du fluide est minimisé, ce qui minimise encore les pertes de charge dans le fluide. Le rotor 1101 comprend un moyeu 1101a s'étendant selon l'axe de rotation A, sensiblement parallèle à la direction d'écoulement x du fluide. Le moyeu 1101a peut être monté sur un arbre 1101c. L'arbre 1101c peut être monté sur un support 1102 s'étendant au moins d'un point à un autre de la face interne 1100e du corps 1100. Dans un plan (y, z) de coupe du support 1102, le support 1102 occupe de préférence une fraction inférieure à 50 %, voire inférieure à 70 %, voire inférieure à 85 % de la surface du passage 1100c. Ainsi, le support minimise une perte de charge du fluide lors de son passage dans le module actionneur 110.

Le rotor 1101 comprend une pluralité de pales 1101b, 1101b' s'étendant radialement à l'axe de rotation A. La portion de transmission 1111c et/ou la première partie 1120a de la jonction étanche 1120, sont disposées selon la direction z perpendiculaire à l'axe A de rotation du rotor 1101, à une distance inférieure à 1 cm, voire à 5 mm, voire à 1 mm, du diamètre externe du rotor 1101, de préférence non-nulle. Lorsque le fluide est inhomogène, le passage de particules solides entre la portion de transmission 1111c et l'extrémité 1101ba des pales 1101b, 1001b' est ainsi limité, comme par exemple illustré en figure 5. Le risque qu'une particule solide perturbe le passage du rayonnement lumineux est limité. En outre, lorsque le fluide est opaque, cette distance assure le passage du rayonnement lumineux entre la portion de transmission 1111c et cette extrémité 1101ba. La précision de la mesure du débit est donc maintenue même pour un fluide opaque. On considère qu'un fluide est opaque à une longueur d'onde donnée lorsque plus de 70% de la puissance lumineuse du rayonnement incident est absorbée par le fluide sur épaisseur de 5 mm.

Selon un exemple, le diamètre D₁₁₀₁ externe du rotor 1101, défini par la rotation des extrémités distales 1101ba des pales 1101b, 1101b', peut être déterminé par la relation suivante :
D₁₁₀₁ = D₁₁₀₀ - d, avec D₁₁₀₀ le diamètre interne du corps 1100 et d une distance, de préférence non-nulle, inférieure à 1 cm, de préférence inférieure à 5 mm, et plus préférentiellement encore à 2 mm.

Notons que les caractéristiques du rotor 1101 peuvent en outre être choisies en fonction de la gamme de débit du fluide à mesurer. Ces caractéristiques peuvent par exemple être la dimension longitudinale du rotor 1101, et/ou le nombre de pales 1101b, 1101b'.

Selon un exemple, le rotor 1101 comprend des pales 1101b 1101b', au moins une pale 1101b étant faite d'un matériau distinct de celui d'une ou des autres pales 1101b' ou recouverte d'un revêtement différent du revêtement ou du matériau d'une ou des autres pales 1101b'. Selon un exemple, au moins une pale est faite d'un matériau distinct d'un matériau constitutif des autres pales et présente un coefficient de réflexion du rayonnement lumineux différent, par exemple inférieur, au matériau constitutif des autres pales.

Selon un exemple, l'ensemble de l'au moins une pale 1101b est faite d'un matériau distinct d'un matériau constitutif de l'ensemble de l'au moins une autre pale, qui présente un coefficient de réflexion du rayonnement lumineux différent, par exemple inférieur, au matériau constitutif de l'au moins une autre pale. Selon un exemple alternatif, au moins une pale est revêtue d'un revêtement différent d'un revêtement et/ou d'un matériau de l'au moins une autre pale, de façon à présenter un coefficient de réflexion du rayonnement lumineux différent, par exemple inférieur au matériau constitutif de l'au moins une autre pale.

Chaque pale peut plus particulièrement être faite uniquement d'un matériau. Ainsi la fabrication du rotor et donc du système est simplifiée. Au moins une pale présente un coefficient de réflexion du rayonnement lumineux différent, inférieur ou supérieur, à celui d'au moins une autre pale. Selon un exemple, au moins une pale peut être faite d'un matériau présentant un coefficient de réflexion du rayonnement lumineux inférieur à celui du matériau constitutif des autres pales. Le coefficient de réflexion peut être défini par le rapport de l'intensité du rayonnement lumineux réfléchi sur l'intensité du rayonnement lumineux incident. Ainsi, le rayon lumineux présente une réflexion plus ou moins importante en fonction des pales, par exemples en fonction du matériau constitutif des pales. Le rayonnement lumineux réfléchi est donc modulé en fonction des pales sur lesquelles il se réfléchit, ce qui facilite la détermination du nombre de tour/unité de temps du rotor. La précision de la mesure du débit peut donc ainsi être encore améliorée. Lorsque chaque pale 1101b, 1101b' est uniquement faite d'un matériau ou est entièrement revêtue par le revêtement, la différence de réflexion entre les pales 1101b se produit sur toute la surface des pales sur laquelle le rayonnement est réfléchi. La détermination du nombre de tour/unité de temps du rotor 1101 est encore plus facilitée, améliorant encore la précision de la mesure du débit. Les matériaux de coefficients de réflexion distincts peuvent être le métal, magnétique ou non, de préférence l'acier inoxydable et le plastique.

Selon un exemple, les pales 1101b, 1101b' du rotor 1101 présentent alternativement des coefficients de réflexion distincts, par exemples elles sont alternativement faites de matériaux présentant des coefficients de réflexion distincts. De façon équivalente, pour une pale 1101b présentant un coefficient de réflexion, la pale ou les pales 1101b' directement adjacentes présentent un coefficient de réflexion distinct. La modulation du rayonnement lumineux réfléchi se produit en fonction des pales 1101b, 1101b' successives sur lesquelles le rayonnement lumineux se réfléchit, ce qui facilite encore la détermination du nombre de tour/unité de temps du rotor. Par exemple, pour un rotor comprenant quatre pales, deux pales 1101b' opposées par rapport à l'axe de rotation du rotor peuvent présenter un premier coefficient de réflexion, par exemple en étant faites d'un premier matériau, et les deux autres pales 1101b opposées par rapport à l'axe de rotation du rotor peuvent présenter un deuxième coefficient de réflexion, par exemple en étant faites d'un deuxième matériau, le premier et le deuxième matériau présentant des coefficients de réflexion distincts.

Selon un exemple le rotor 1101 comprend au moins deux pales 1101b' en matière plastique et au moins deux pales 1101b en métal, magnétique ou non, et de préférence en acier inoxydable. Ainsi, le rayon lumineux présente une réflexion maximale sur les pales métalliques, et une réflexion moindre sur les pales en matière plastiques. Le rayonnement lumineux réfléchi est donc modulé en fonction des pales sur lesquelles il se réfléchit, ce qui facilite la détermination du nombre de tour/unité de temps du rotor.

Des exemples de réalisation du dispositif de mesure 111 sont maintenant détaillés. Selon un exemple, le module d'émission 1110, le module optique 1111 et le module de réception 1112 peuvent être configurés pour détecter par proximité la rotation du rotor 1101. Dans la détection par proximité, le module d'émission 1110 et le module de réception 1112 sont adjacents. Le rayonnement lumineux est réfléchi par un réflecteur. Lorsque que les pales 1101b, 1101b' du rotor 1101 coupent le faisceau, le rayonnement réfléchi sur les pales permet de détecter la vitesse de rotation des pales 1101b, 1001b'. Pour cela, la fibre optique 1111a peut être une fibre optique de proximité. Le rayonnement lumineux peut présenter une longueur d'onde appartement au domaine de l'infrarouge. La portée du rayonnement lumineux dans le fluide est alors de quelques mm.

Le module d'émission 1110 peut être configuré pour émettre un rayonnement lumineux incident présentant une longueur d'onde comprise entre 600 et 2000 nm. Par rapport à d'autres domaines de longueurs d'onde, les sources lumineuses du rouge ou du proche infra-rouge sont peu coûteuses, tout en offrant une précision suffisante pour la mesure du débit.

Selon un exemple, le module d'émission 1110 comprend une source laser. Selon cet exemple, le module de conversion 1113 comprend un interféromètre laser. La source laser émet un rayonnement temporellement cohérent permettant la détection de la rotation du rotor 1101 par interférométrie. De façon connue dans le domaine, l'interférométrie est une mesure utilisant le phénomène d'interférence des ondes. Les franges d'interférence résultantes donnent des informations sur la longueur du chemin optique parcouru. Cette technique présente l'avantage d'être précise tout en limitant le coût du système de mesure 11.

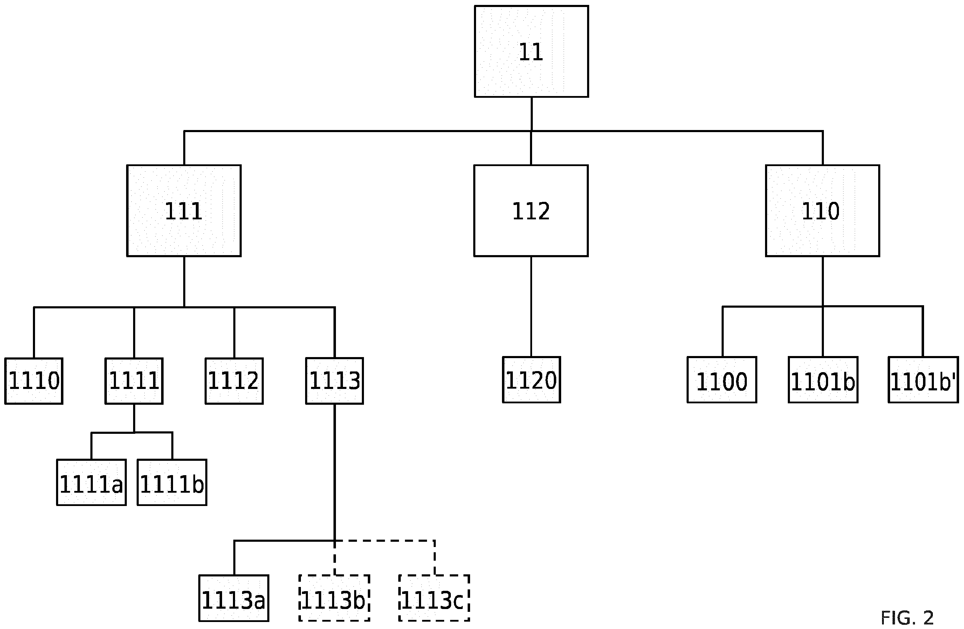

Selon un exemple alternatif, la fibre optique 1111a peut comprendre un réseau de Bragg. Ainsi, le dispositif de mesure 111 permet non seulement une mesure du débit du fluide, mais en outre une mesure de sa température et/ou de sa pression. Le fonctionnement d'une fibre optique à réseau de Bragg est décrit à titre d'exemple par la figure 6. Le rayonnement réfléchi 3 en provenance des pales 1101b du rotor 1101 peut pénétrer dans la fibre optique 1111a par la portion de transmission 1111c. En fonction des paramètres du réseau de Bragg dans la fibre optique 1111a, au moins une longueur d'onde, dite longueur d'onde de Bragg 30, est réfléchie par le réseau et ressort de la fibre par la portion de transmission 1111c. Le signal lumineux en sortie du réseau de Bragg 31 est donc constitué du rayonnement réfléchi 3 auquel l'au moins une longueur d'onde de Bragg a été soustraite. La température et la pression du fluide peuvent faire varier les paramètres du réseau de Bragg, par exemple par dilatation ou déformation, et donc le signal lumineux 31 obtenu. La dilatation ou déformation du réseau de Bragg s'entend ici de l'effet de la température et de la pression du fluide sur le réseau de Bragg, et non d'une déformation mécanique induite par la rotation du rotor. C'est notamment le cas lorsque le module optique 1111 est configuré pour être séparé du rotor 1101 au moins par le fluide. Comme illustré en pointillé dans la figure 2, le module de conversion 1113 peut comprendre un moyen de conversion du débit 1111a ainsi que des moyens de conversion de la température 1113b et de la pression 1113c. Comme illustré en figure 3B, le procédé de mesure du débit du fluide peut en outre comprendre une conversion du rayonnement réfléchi en température et/ou en pression du fluide.

Avec une fibre optique comprenant un réseau de Bragg, la largeur spectrale du rayonnement lumineux peut être sensiblement comprise entre quelque nm et plusieurs milliers de nm.

Notons qu'on peut prévoir que le dispositif de mesure 111 comprennent des capteurs de pression et/ou de température, par exemple additionnels au module optique 1111. Comme illustré en figure 3A, le procédé de mesure du débit du fluide peut en outre comprendre une mesure de la température et/ou de la pression du fluide.

Le procédé de mesure du débit du fluide, ne faisant pas partie de l'invention telle que revendiquée, peut en outre comprendre un étalonnage du système de mesure préalablement à son utilisation. Par exemple, cet étalonnage peut être effectué de façon spécifique aux conditions d'utilisations du système de mesure 11 dans l'équipement 1.

Au vu de la description qui précède, il apparaît clairement que l'invention propose un système de mesure de débit d'un fluide comportant du liquide amélioré par rapport aux solutions existantes, et notamment dont la précision et la fiabilité de la mesure du débit sont augmentées par rapport aux solutions existantes.

### LISTE DES REFERENCES NUMERIQUES

- 1: Équipement
- 10: Enceinte
- 100: Parois de l'enceinte
- 11: Système de mesure du débit
- 110: Module actionneur
- 1100: Corps
- 1100a: Entrée
- 1100b: Sortie
- 1100c: Passage
- 1100d: Paroi externe
- 1100e: Paroi interne
- 1101: Rotor
- 1101a: Moyeu
- 1101b: Pale
- 1101ba: Extrémité distale
- 1101b': Pale
- 1101c: Arbre
- 1102: Support
- 111: Dispositif de mesure
- 1110: Module d'émission
- 1111: Module optique
- 1111a: Fibre optique
- 1111b: Gaine
- 1111c: Portion de transmission
- 1112: Module de réception
- 1113: Module de conversion
- 1113a: Sous-module de conversion du débit
- 1113b: Sous-module de conversion de la température
- 1113c: Sous-module de conversion de la pression
- 112: Module de raccordement
- 1120: Jonction étanche
- 1120a: Première partie
- 1120b: Deuxième partie
- 2: Procédé de mesure
- 20: Émission d'un rayonnement lumineux incident
- 21: Transmission du rayonnement lumineux incident
- 22: Réflexion du rayonnement lumineux
- 23: Réception du rayonnement lumineux réfléchi
- 24: Conversion en débit de fluide
- 25: Transmission du rayonnement lumineux réfléchi
- 26: Mesure de la pression et de la température
- 26': Conversion en température
- 26": Conversion en pression
- 3: Rayonnement réfléchi
- 30: Rayonnement de Bragg
- 31: Signal lumineux en sortie du réseau de Bragg

## Revendications

1. Système (11) de mesure du débit d'un fluide comportant du liquide comprenant :
- un corps (1100) comprenant au moins une entrée (1100a), au moins une sortie (1100b) et au moins un passage (1100c) pour l'écoulement du fluide depuis l'entrée (1100a) jusqu'à la sortie (1100b),
- au moins un rotor (1101) disposé à l'intérieur du passage (1100c) et configuré pour être entraîné, par l'écoulement du fluide, en rotation autour d'un axe (A) sensiblement parallèle à une direction principale selon laquelle le fluide est destiné à s'écouler dans le passage (1100c), le rotor (1101) comprenant une pluralité de pales (1101b, 1101b'),
- un dispositif de mesure (111) d'une vitesse de rotation du rotor (1101), le dispositif de mesure (111) comprenant :
• un module d'émission (1110) d'un rayonnement lumineux incident,
• un module optique (1111) configuré pour
∘ transmettre le rayonnement lumineux incident depuis le module d'émission (1110) sur des pales (1101b) du rotor (1101), et
∘ recevoir un rayonnement lumineux réfléchi, le rayonnement lumineux réfléchi étant issu de la réflexion, sur les pales (1101b) du rotor (1101), du rayonnement lumineux incident,
• un module de conversion (1113) configuré pour
∘ déterminer la vitesse de rotation du rotor (1101) en fonction du rayonnement réfléchi et
∘ déterminer le débit du fluide en fonction de la vitesse de rotation du rotor (1101), et
dans lequel le module optique (1111) est configuré de sorte que le rayonnement lumineux incident est incident sur les pales (1101b) du rotor (1101) selon une direction sensiblement perpendiculaire à l'axe (A) de rotation du rotor (1101), et en ce que le dispositif de mesure (111) comprend en outre un module de raccordement (112) du module optique (1111) au corps (1100), le module de raccordement (112) étant configuré pour établir une jonction étanche au fluide entre le module optique (1111) et le passage (1100c), et
**caractérisé en ce que** au moins une pale (1101b') du rotor (1101) présente un coefficient de réflexion du rayonnement lumineux différent du coefficient de réflexion du rayonnement lumineux d'au moins une autre pale (1101b).

2. Système (11) selon la revendication précédente dans lequel, le module optique (1111) comprend une portion de transmission (1111c) du rayonnement lumineux incident disposée, selon la direction sensiblement perpendiculaire à l'axe (A) de rotation du rotor (1101), à une distance inférieure à 1 cm, de préférence à 5 mm, de préférence à 2 mm, du diamètre externe du rotor (1101).

3. Système (11) selon l'une quelconque des revendications précédentes, dans lequel le module optique (1111) comprend une fibre optique (1111a).

4. Système (11) selon la revendication précédente, dans lequel le module optique (1111) comprend une fibre optique (1111a) à détection de proximité.

5. Système (11) selon l'une quelconque des revendications précédentes, dans lequel le module optique (1111) est configuré pour transmettre le rayonnement lumineux réfléchi au module de conversion (1113).

6. Système (11) selon l'une quelconque des revendications précédentes, dans lequel le corps (1100) présente une paroi externe (1100d) configurée pour être au contact du fluide en écoulement.

7. Système (11) selon l'une quelconque des revendications précédentes, dans lequel au moins une pale (1101b') étant faite d'un matériau présentant un coefficient de réflexion du rayonnement lumineux inférieur à celui d'un matériau constitutif des autres pales (1101b).

8. Système (11) selon la revendication précédente, dans lequel le rotor (1101) comprend au moins quatre pales (1101b, 1101b'), au moins deux pales (1101b') étant en matière plastique et au moins deux pales (1101b) étant en métal.

9. Système (11) selon l'une quelconque des revendications précédentes, dans lequel le module d'émission (1110) comprend une source laser et le module de conversion (1113) comprend un interféromètre laser.

10. Système (11) selon l'une quelconque des revendications 1 à 8, dans lequel le module optique (1111) comprend une fibre optique (1111a) comprenant un réseau de Bragg.

11. Système (11) selon l'une quelconque des revendications précédentes, dans lequel le module d'émission (1110) est configuré pour émettre un rayonnement lumineux incident présentant une longueur d'onde comprise entre 600 et 2000 nm.

12. Système (11) selon l'une quelconque des revendications précédentes comprenant au moins l'un parmi :
- au moins un capteur de pression configuré pour mesurer un paramètre relatif à une pression du fluide s'écoulant dans le corps (1100),
- au moins un capteur de température, configuré pour mesurer un paramètre relatif à une température du fluide s'écoulant dans le corps (1100).

13. Équipement (1) comprenant une enceinte (10) configurée pour contenir un fluide comportant du liquide en écoulement, et un système (11) de mesure du débit du fluide selon l'une quelconque des revendications précédentes, l'enceinte (10) étant délimitée par une paroi (100) distincte du corps (1100) du système (11) de mesure.

14. Équipement (1) selon la revendication précédente, dans lequel l'enceinte (10) est configurée pour contenir un fluide comportant du liquide à une pression inférieure à 200 bar, à une température inférieure à 350 °C et s'écoulant à un débit compris entre 1 et 1000 m³/h.

15. Équipement (1) selon la revendication précédente, dans lequel l'enceinte est configurée pour contenir un fluide comportant du liquide à une pression inférieure à 10 bar et à une température inférieure à 120 °C.

## Patentansprüche

1. System (11) zum Messen einer Durchflussrate eines Fluids, das Flüssigkeit enthält, umfassend:
- einen Körper (1100), der mindestens einen Einlass (1100a), mindestens einen Auslass (1100b) und mindestens einen Durchgang (1100c) für eine Fluidströmung vom Einlass (1100a) bis zum Auslass (1100b) umfasst;
- mindestens einen Rotor (1101), der innerhalb des Durchgangs (1100c) angeordnet und dazu konfiguriert ist, durch die Fluidströmung um eine Achse (A) drehangetrieben zu werden, die im Wesentlichen parallel zu einer Hauptrichtung ist, gemäß der das Fluid in dem Durchgang (1100c) strömen soll, wobei der Rotor (1101) eine Vielzahl von Flügeln (1101b, 1101b') umfasst,
- eine Vorrichtung zum Messen (111) einer Rotationsgeschwindigkeit des Rotors (1101), wobei die Messvorrichtung (111) Folgendes umfasst:
• ein Modul zur Emission (1110) einer einfallenden Lichtstrahlung,
• ein optisches Modul (1111), das konfiguriert ist zum
∘ Übertragen der einfallenden Lichtstrahlung vom Emissionsmodul (1110) auf Flügel (1101b) des Rotors (1101), und
∘ Empfangen einer reflektierten Lichtstrahlung, wobei die reflektierte Lichtstrahlung aus der Reflexion der einfallenden Lichtstrahlung an den Flügeln (1101b) des Rotors (1101) stammt,
• ein Konvertierungsmodul (1113), das konfiguriert ist zum
∘ Bestimmen der Rotationsgeschwindigkeit des Rotors (1101) anhand der reflektierten Lichtstrahlung und
∘ Bestimmen der Durchflussrate des Fluids anhand der Rotationsgeschwindigkeit des Rotors (1101), und
wobei das optische Modul (1111) so konfiguriert ist, dass die einfallende Lichtstrahlung in einer Richtung, die im Wesentlichen senkrecht zur Rotationsachse (A) des Rotors (1101) verläuft, auf die Flügel (1101b) des Rotors (1101) einfällt, und dass die Messvorrichtung (111) ferner ein Modul zum Verbinden (112) des optischen Moduls (1111) mit dem Körper (1100) umfasst, wobei das Verbindungsmodul (112) dazu konfiguriert ist, eine Fluiddichtverbindung zwischen dem optischen Modul (1111) und dem Durchgang (1100c) herzustellen, und
**dadurch gekennzeichnet, dass** mindestens ein Flügel (1101b') des Rotors (1101) einen Reflexionskoeffizienten der Lichtstrahlung aufweist, der sich von einem Reflexionskoeffizienten der Lichtstrahlung mindestens eines anderen Flügels (1101b) unterscheidet.

2. System (11) nach dem vorhergehenden Anspruch, wobei das optische Modul (1111) einen Übertragungsabschnitt (1111c) für die einfallende Lichtstrahlung umfasst, der in der im Wesentlichen senkrecht zur Rotationsachse (A) des Rotors (1101) verlaufenden Richtung in einem Abstand von weniger als 1 cm, vorzugsweise weniger als 5 mm, vorzugsweise weniger als 2 mm, von einem Außendurchmesser des Rotors (1101) angeordnet ist.

3. System (11) nach einem der vorhergehenden Ansprüche, wobei das optische Modul (1111) eine optische Faser (1111a) umfasst.

4. System (11) nach dem vorhergehenden Anspruch, wobei das optische Modul (1111) eine optische Faser (1111a) zur Näherungserkennung umfasst.

5. System (11) nach einem der vorhergehenden Ansprüche, wobei das optische Modul (1111) dazu konfiguriert ist, die reflektierte Lichtstrahlung an das Konvertierungsmodul (1113) zu übertragen.

6. System (11) nach einem der vorhergehenden Ansprüche, wobei der Körper (1100) eine Außenwand (1100d) aufweist, die dazu konfiguriert ist, mit dem strömenden Fluid in Kontakt zu stehen.

7. System (11) nach einem der vorhergehenden Ansprüche, wobei mindestens ein Flügel (1101b`) aus einem Material hergestellt ist, das einen Reflexionskoeffizienten der Lichtstrahlung aufweist, der kleiner ist als der eines Materials, aus dem die anderen Flügel (1101b) hergestellt sind.

8. System (11) nach dem vorhergehenden Anspruch, wobei der Rotor (1101) mindestens vier Flügel (1101b, 1101b`) umfasst, wobei mindestens zwei Flügel (1101b`) aus Kunststoff hergestellt sind und mindestens zwei Flügel (1101b) aus Metall hergestellt sind.

9. System (11) nach einem der vorhergehenden Ansprüche, wobei das Emissionsmodul (1110) eine Laserquelle umfasst und das Konvertierungsmodul (1113) ein Laserinterferometer umfasst.

10. System (11) nach einem der Ansprüche 1 bis 8, wobei das optische Modul (1111) eine optische Faser (1111a) umfasst, die ein Bragg-Gitter umfasst.

11. System (11) nach einem der vorhergehenden Ansprüche, wobei das Emissionsmodul (1110) dazu konfiguriert ist, eine einfallende Lichtstrahlung mit einer Wellenlänge zwischen 600 und 2000 nm zu emittieren.

12. System (11) nach einem der vorhergehenden Ansprüche, umfassend mindestens eines von:
- mindestens einem Drucksensor, der dazu konfiguriert ist, einen Parameter zu messen, der sich auf einen Druck des im Körper (1100) strömenden Fluids bezieht,
- mindestens einem Temperatursensor, der dazu konfiguriert ist, einen Parameter zu messen, der sich auf eine Temperatur des im Körper (1100) strömenden Fluids bezieht.

13. Einrichtung (1), umfassend eine Kammer (10), die dazu konfiguriert ist, ein Fluid zu beinhalten, das die strömende Flüssigkeit enthält, und ein System (11) zum Messen der Durchflussrate des Fluids nach einem der vorhergehenden Ansprüche, wobei die Kammer (10) durch eine vom Körper (1100) des Messsystems (11) getrennte Wand (100) begrenzt wird.

14. Einrichtung (1) nach dem vorhergehenden Anspruch, wobei die Kammer (10) dazu konfiguriert ist, ein Fluid zu beinhalten, das eine Flüssigkeit enthält, die einen Druck von weniger als 200 bar und eine Temperatur von weniger als 350 °C aufweist und mit einer Durchflussrate zwischen 1 und 1000 m³/h strömt.

15. Einrichtung (1) nach dem vorhergehenden Anspruch, wobei die Kammer dazu konfiguriert ist, ein Fluid zu beinhalten, das eine Flüssigkeit enthält, die einen Druck von weniger als 10 bar und eine Temperatur von weniger als 120 °C aufweist.

## Claims

1. A system (11) for measuring the flowrate of a fluid including liquid comprising:
- a body (1100) comprising at least one inlet (1100a), at least one outlet (1100b) and at least one passage (1100c) for the flow of fluid from the inlet (1100a) to the outlet (1100b),
- at least one rotor (1101) disposed inside the passage (1100c) and configured to be rotated, by the flow of the fluid, around an axis (A) substantially parallel to a main direction wherein the fluid is intended to flow in the passage (1100c), the rotor (1101) comprising a plurality of blades (1101b, 1101b'),
- a device (111) for measuring a rotational speed of the rotor (1101), the measuring device (111) comprising:
- a module (1110) for emitting incident light radiation,
- an optical module (1111) configured to
o transmit the incident light radiation from the emission module (1110) onto the blades (1101b) of the rotor (1101), and
o receive reflected light radiation, the reflected light radiation coming from the reflection, on the blades (1101b) of the rotor (1101), of the incident light radiation,
- a conversion module (1113) configured to
o determine the rotational speed of the rotor (1101) according to the reflected radiation and
o determine the flowrate of the fluid according to the rotational speed of the rotor (1101), and
wherein the optical module (1111) is configured so that the incident light radiation is incident on the blades (1101b) of the rotor (1101) in a direction substantially perpendicular to the axis (A) of rotation of the rotor (1101), and in that the measuring device (111) further comprises a module (112) for connecting the optical module (1111) to the body (1100), the connection module (112) being configured to establish a fluid-tight junction between the optical module (1111) and the passage (1100c), and
**characterised in that** at least one blade (1101b') of the rotor (1101) has a reflection coefficient of light radiation different from the reflection coefficient of light radiation of at least one other blade (1101b).

2. The system (11) according to the preceding claim wherein, the optical module (1111) comprises a transmission portion (1111c) of the incident light radiation disposed, in the direction substantially perpendicular to the axis (A) of rotation of the rotor (1101), at a distance less than 1 cm, preferably 5 mm, preferably 2 mm, from the external diameter of the rotor (1101).

3. The system (11) according to any one of the preceding claims, wherein the optical module (1111) comprises an optical fibre (1111a).

4. The system (11) according to the preceding claim, wherein the optical module (1111) comprises an optical fibre (1111a) with proximity detection.

5. The system (11) according to any one of the preceding claims, wherein the optical module (1111) is configured to transmit the reflected light radiation to the conversion module (1113).

6. The system (11) according to any one of the preceding claims, wherein the body (1100) has an external wall (1100d) configured to be in contact with the flowing fluid.

7. The system (11) according to any one of the preceding claims, wherein at least one blade (1101b') being made of a material having a reflection coefficient of light radiation lower than that of a material constituting the other blades (1101b).

8. The system (11) according to the preceding claim, wherein the rotor (1101) comprises at least four blades (1101b, 1101b'), at least two blades (1101b') being made of plastic and at least two blades (1101b) being made of metal.

9. The system (11) according to any one of the preceding claims, wherein the emission module (1110) comprises a laser source and the conversion module (1113) comprises a laser interferometer.

10. The system (11) according to any one of claims 1 to 8, wherein the optical module (1111) comprises an optical fibre (1111a) comprising a Bragg grating.

11. The system (11) according to any one of the preceding claims, wherein the emission module (1110) is configured to emit incident light radiation having a wavelength comprised between 600 and 2000 nm.

12. The system (11) according to any one of the preceding claims comprising at least one of:
- at least one pressure sensor configured to measure a parameter relating to a pressure of the fluid flowing in the body (1100),
- at least one temperature sensor, configured to measure a parameter relating to a temperature of the fluid flowing in the body (1100).

13. An equipment (1) comprising an enclosure (10) configured to contain a fluid including flowing liquid, and a system (11) for measuring the flowrate of the fluid according to any one of the preceding claims, the enclosure (10) being delimited by a wall (100) distinct from the body (1100) of the measuring system (11).

14. The equipment (1) according to the preceding claim, wherein the enclosure (10) is configured to contain a fluid including liquid at a pressure less than 200 bar, at a temperature less than 350 °C and flowing at a flowrate comprised between 1 and 1000 m³/h.

15. The equipment (1) according to the preceding claim, wherein the enclosure is configured to contain a fluid including liquid at a pressure less than 10 bar and at a temperature less than 120 °C.
